# EUROPÄISCHE PATENTANMELDUNG

(11) **EP 1 357 326 A1**
(43) Veröffentlichungstag der Anmeldung: **29.10.2003**
(21) Anmeldenummer: 03008216.8
(22) Anmeldetag: 09.04.2003
(51) Int. Cl.: F16M 1/00, F16J 13/06, E05D 15/28

(54) **Verfahrenstechnische Maschine**

(30) Priorität: 27.04.2002 DE 10218994
(71) Anmelder: HOSOKAWA ALPINE Aktiengesellschaft & Co. OHG, 86199 Augsburg (DE)
(72) Erfinder: Illigner, Ekkehardt, 86167 Augsburg (DE)
(74) Vertreter: Schwarz, Thomas, Dipl.-Ing.

(57) **Zusammenfassung**

Die Erfindung betrifft eine verfahrenstechnische Maschine, insbesondere Mühle, Sichter oder Zellenradschleuse, mit mindestens einer Gelenkverbindung zur beweglichen Halterung mindestens eines bewegbaren Maschinenteils (7; 16; 32) an einem feststehenden Maschinenteil (1; 31). Um eine vereinfachte Bedienung, insbesondere bei der Anordnung in einem Isolator, zu ermöglichen, enthält die Gelenkverbindung einen am feststehenden Maschinenteil (1) beweglich angelenkten ersten Schwenkarm (17; 27) und mindestens einen an diesem verschwenkbar angelenkten weiteren Schwenkarm (18; 28) zur Halterung des bewegbaren Maschinenteils (7; 16; 32.

## Beschreibung

Die Erfindung betrifft eine verfahrenstechnische Maschine, insbesondere Mühle, Sichter, Zellenradschleuse oder dgl., nach dem Oberbegriff des Anspruchs 1.

Verfahrenstechnische Maschinen, wie z.B. Mühlen, Sichter, Zellenradschleusen, Zyklone usw., werden zur Abschirmung gegenüber der Umgebung und zum Arbeiten unter sterilen Bedingungen vielfach in sogenannten Isolatoren untergebracht. Derartige Isolatoren sind üblicherweise dicht abgeschlossene Gehäuse oder Behälter, in denen Sichtfenster und ggf. Türen oder Schleusen vorgesehen sind. Zur Handhabung oder Bedienung der in den Isolatoren angeordneten Maschinen ist das Gehäuse oder der Behälter oftmals als Handschuhkasten ausgeführt. Hierbei sind spezielle Öffnungen in der Gehäusewand mit Handschuhen derart verschlossen, daß man von außen in den Handschuh hineingreifen und die im Inneren angeordnete Maschine bedienen kann. Durch die fest installierten Handschuhe ist jedoch die Bewegungsfreiheit und das Greifvermögen deutlich eingeschränkt. Dadurch können sich im besonderen bei der Handhabung schwerer und sperriger Maschinenteile oder bei der Montage und Demontage auszuwechselnder Bauteile Probleme ergeben. Oft zu bedienende oder demontierbare Maschinenteile, wie z.B. Gehäuseabdeckungen, Mühlentüren und dgl., sind daher oftmals über ein herkömmliches Scharniergelenk verschwenkbar an einem stationären Maschinenteil angelenkt, so daß sie bei Bedarf zur Seite weggeklappt werden können. Die üblichen Scharnierverbindungen bieten aber nicht die erforderliche Bewegungsfreiheit, um z.B. die auf eine Welle aufsteckbaren bzw. von dieser bei Bedarf abnehmbaren Maschinenteile handhaben zu können.

Aufgabe der Erfindung ist es, eine verfahrenstechnische Maschine der eingangs genannten Art zu schaffen, die eine vereinfachte Bedienung, insbesondere bei der Anordnung in einem Isolator ermöglicht.

Diese Aufgabe wird durch eine verfahrenstechnische Maschine mit den Merkmalen des Anspruchs 1 gelöst. Zweckmäßige Ausgestaltungen und vorteilhafte Weiterbildungen der Erfindung sind in den Unteransprüchen angegeben.

Ein wesentlicher Vorteil der Erfindung besteht darin, daß die Maschinenteile auch im demontierten Zustand gehalten bzw. abgestützt werden können, so daß deren Handhabung erleichtert wird. Die über mehrgelenkige Scharnierverbindungen bewegbar gehaltenen Maschinenteile können außerdem mit größeren Bewegungsmöglichkeiten gehandhabt werden. So können z.B. demontierbare Maschinenteile nicht nur zur Seite weggeklappt, sondern auch in Richtung ihrer Mittelachse verschoben oder quer dazu bewegt werden. Die Maschine kann so auch innerhalb eines Isolatorgehäuses einfach und schnell bedient werden. Es gibt insbesondere keine Kleinteile an der Maschine, die sich schlecht greifen lassen und zu Boden fallen können.

Weitere Besonderheiten und Vorzüge der Erfindung ergeben sich aus der folgenden Beschreibung eines Ausführungsbeispiels anhand der Zeichnung. Es zeigt:
- **Figur 1**: eine Teilansicht einer Mühle im geschlossenen Zustand;
- **Figur 2**: die in Figur 1 gezeigte Mühle mit geöffnetem Mühlendeckel;
- **Figur 3**: die in Figur 1 gezeigte Mühle mit geöffnetem Mühlendeckel und demontiertem Schlägerrad und
- **Figur 4**: eine Scharnierverbindung in einer Schnittansicht.

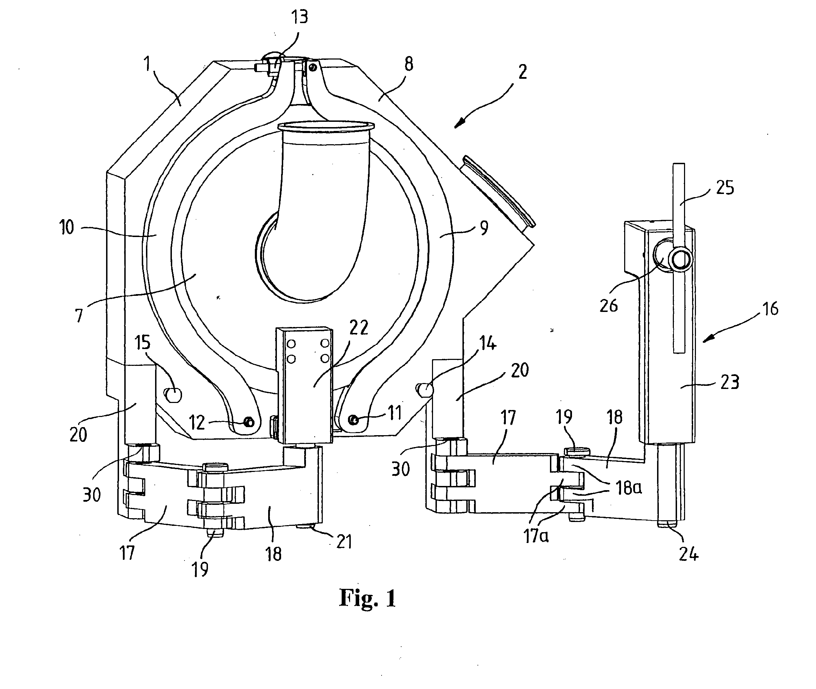

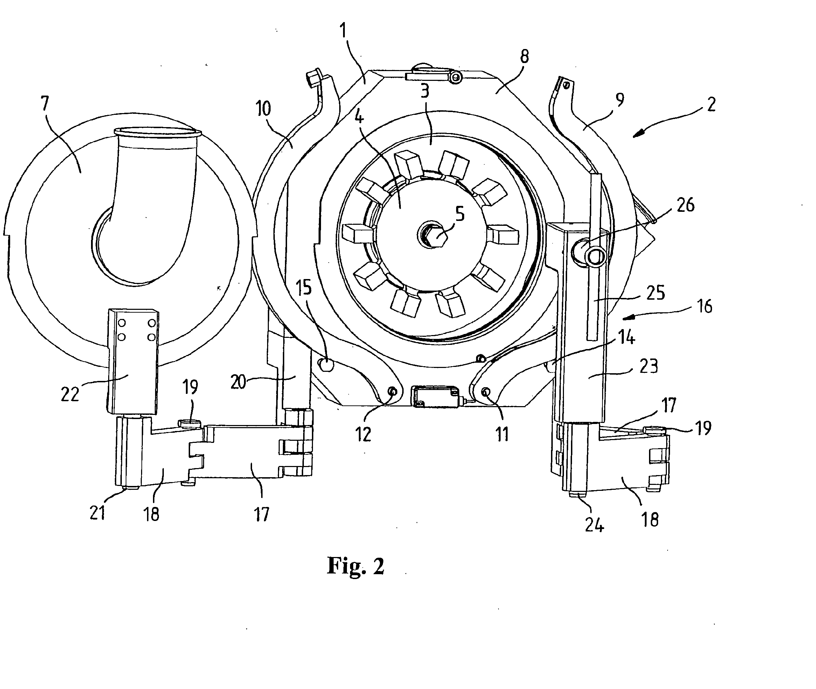

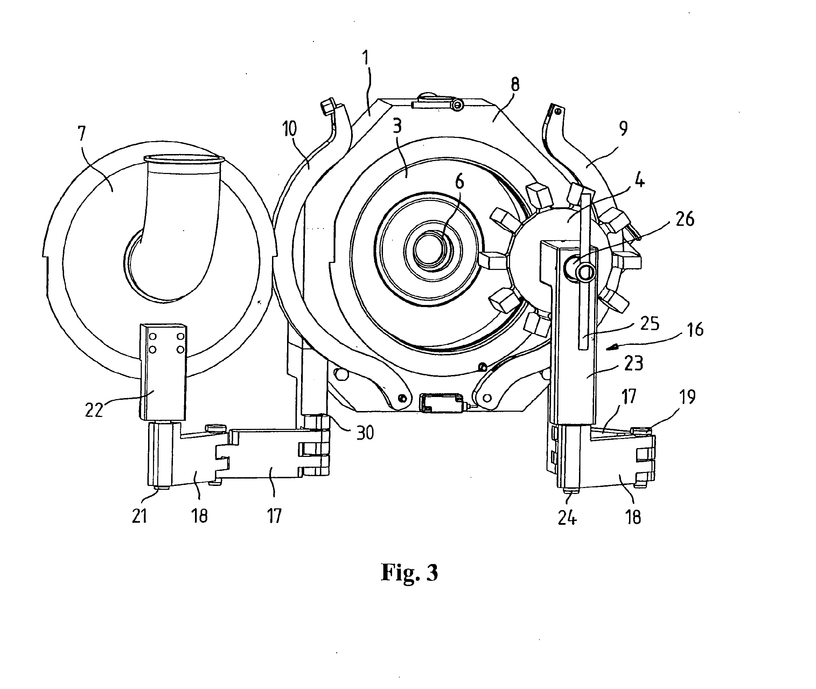

In den Figuren 1 bis 3 ist ein ortsfestes Maschinengehäuse 1 einer nur zum Teil dargestellten Mühle 2 gezeigt. Diese Mühle 2 ist zur Anordnung in einem nicht dargestellten Isolatorgehäuse bestimmt. Wie aus Figur 2 hervorgeht, weist das Maschinengehäuse 1 eine kreisrunde Öffnung 3 auf, in der ein motorisch angetriebenes Schlägerrad 4 angeordnet ist. Das Schlägerrad 4 ist über eine zentrale Befestigungsschraube 5 auf einer in Figur 3 dargestellten Antriebswelle 6 abnehmbar befestigt. Die Befestigungsschraube 5 ist zweckmäßigerweise unverlierbar an dem Schlägerrad gehalten. Die Öffnung 3 wird durch einen Gehäusedeckel 7 verschlossen, der über eine im folgenden näher erläuterte mehrgelenkige Scharnierverbindung zur Seite verschwenkbar am Maschinengehäuse 1 gehalten wird. An der Rückseite des Gehäusedeckels 7 ist ein - nicht erkennbarer - Ring angeordnet, der bei geschlossenem Gehäusedeckel in die Öffnung 3 ragt. An der Innenseite dieses Rings ist eine Mahlbahn ausgebildet. Um den Gehäusedeckel 7 in seiner geschlossenen Stellung am Maschinengehäuse zu fixieren, sind an einer vorderen Stirnwand 8 des Maschinengehäuses 1 zwei zur Seite verschwenkbare halbringförmige Klemmbügel 9 bzw. 10 angelenkt. Die beiden Klemmbügel 9 und 10 sind an ihrem unteren Ende unterhalb der Öffnung 3 um jeweils einen Gelenkstift 11 bzw. 12 verschwenkbar angeordnet und können an ihrem oberen Ende durch eine Spannschraube 13 oder dgl. verspannt werden. An der Innenseite der beiden Klemmbügel 9 und 10 ist eine Nut vorgesehen, in die der Rand des Gehäusedeckels 7 eingreift. Zur Begrenzung der seitlichen Verschwenkbewegung der beiden Klemmbügel 9 und 10 sind an der Stirnwand 8 entsprechende Anschläge 14 und 15 montiert.

An dem Maschinengehäuse 1 sind zwei als mehrgelenkige Scharnierverbindungen ausgeführte Gelenkverbindungen angeordnet, von denen die eine zur Halterung des Gehäusedeckels 7 und die andere zur Halterung einer im weiteren noch näher beschriebenen Vorrichtung 16 für die Montage bzw. Demontage des Schlägerrads 4 dient. Die beiden Scharnierverbindungen bestehen aus jeweils einem am Maschinengehäuse 1 verschwenkbar angelenkten ersten Schwenkarm 17 und einen an diesem verschwenkbar angelenkten zweiten Schwenkarm 18, der den Gehäusedeckel 7 bzw. die Vorrichtung 16 trägt. Die beiden Schwenkarme 17 und 18 sind über ineinandergreifende Stege 17a bzw. 18a und einen Scharnierbolzen 19 um dessen Mittelachse verschwenkbar verbunden. Die Anlenkung der beiden Schwenkarme 17 am Maschinengehäuse 1 erfolgt bei der gezeigten Ausführung über gesonderte Scharnierglieder 20, an denen die Schwenkarme 17 um einen Scharnierbolzen 30 verschwenkbar angeordnet sind. Die Scharnierglieder 20 sind am Maschinengehäuse 1 festgeschraubt oder auf andere Weise befestigt. Die Scharnierglieder 20 können aber auch einstückig mit dem Maschinengehäuse 1 ausgeführt sein.

Bei der in den Figuren 1 bis 3 linken Scharnierverbindung zur bewegbaren Halterung des Gehäusedeckels 7 ist in dem freien Ende des zweiten Schwenkarms 18 ein nach unten ragender vertikaler Lagerzapfen 21 in einer mit dem Gehäusedeckel 7 fest verbundenen Halteplatte 22 drehbar gelagert. Dadurch kann der über die Scharnierverbindung nach vorne weggeklappte Gehäusedeckel 7 bei Bedarf um 360° gedreht werden.

Über die in den Figuren 1 bis 3 rechte Scharnierverbindung ist die Vorrichtung 16 für die Montage und Demontage des Schlägerrads 4 am Maschinengehäuse 1 gehalten. Die Vorrichtung 16 enthält eine abgewinkelte Haltestütze 23, die ebenfalls um einen vertikalen Lagerzapfen 24 am freien Ende des zweiten Schwenkarms 18 drehbar angeordnet ist. In dem oberen Teil der Haltestütze 23 ist eine mittels eines Handgriffs 25 drehbare Montagebuchse 26 angeordnet, mit der die an dem Schlägerrad 4 unverlierbar gehaltene Befestigungsschraube 5 betätigt und das Schlägerrad 4 von der Antriebswelle 6 abgenommen oder auf diese wieder aufgesetzt werden kann. Um eine vertikale Ausrichtung der Montagebuchse 26 gegenüber der Befestigungsschraube 5 zu ermöglichen, ist die Haltestütze 23 an dem Schwenkarm 18 vertikal verschiebbar angeordnet.

Bei der vorstehend beschriebenen Mühle 2 kann der Gehäusedeckel 7 relativ schnell und einfach geöffnet werden. So muß nur die an dem Klemmbügel 9 gehaltene Klemmschraube gelöst werden, um die Halterung des Gehäusedeckels 7 am Maschinengehäuse 1 durch seitliches Verschwenken der beiden Klemmbügel 9 und 10 zu öffnen. Der Gehäusedeckel 7 wird über die mehrgelenkige Scharnierverbindung gehalten, so daß der an der Innenseite befindliche Ring mit der daran angeordneten Mahlbahn zunächst aus der Öffnung 3 herausgezogen und dann zur Seite weggeklappt werden kann. Anschließend kann das Schlägerrad 4 mit Hilfe der Montagevorrichtung 16 gelöst und ebenfalls aus der Öffnung 3 herausgenommen werden. Es sind keine Kleinteile vorhanden, die schlecht zu greifen sind und zu Boden fallen können. Dadurch kann eine derartige Mühle auch in einem nur beschränkt zugänglichen Handschuhkasten ohne weiteres bedient werden.

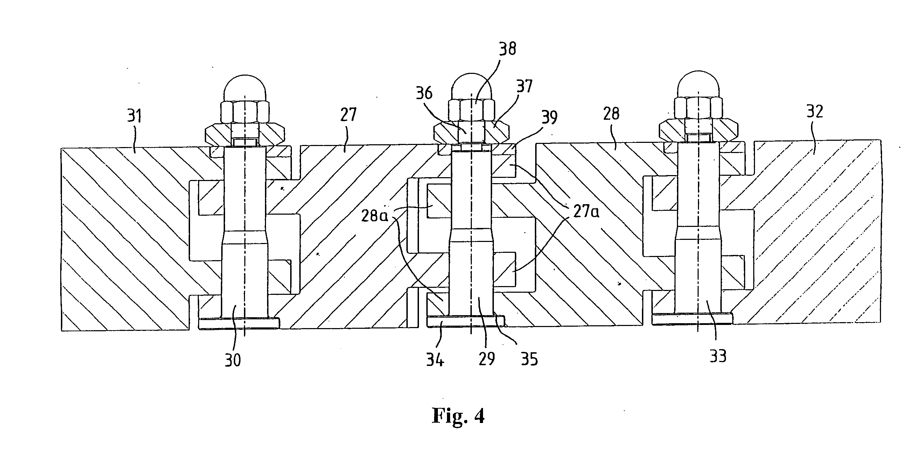

In Figur 4 ist ein weiteres Ausführungsbeispiel einer doppelgelenkigen Scharnierverbindung für die Halterung eines bewegbaren Maschinenteils an einem feststehenden Maschinenteil gezeigt. Bei dieser Gelenkverbindung sind ein erster Schwenkarm 27 und ein zweiter Schwenkarm 28 über einen als Einstellbolzen ausgeführten ersten Schanierbolzen 29 gelenkig verbunden. Der erste Schwenkarm 27 ist um einen zweiten Scharnierbolzen 30 verschwenkbar an einem feststehenden Scharnierteil 31, z.B. an einem Maschinengehäuse oder einer ortsfesten Wand, angelenkt. An dem in Figur 4 rechten Ende des zweiten Schwenkarms 28 ist ein bewegbares Maschinenteil 32, wie z.B. ein Gehäusedeckel, um einen dritten Scharnierbolzen 33 verschwenkbar angelenkt. Die beiden Schwenkarme 27 und 28 haben ineinandergreifende Stege 27a und 28a, die über den Scharnierbolzen 29 miteinander verbunden sind. Bei der gezeigten Ausführung hat der Scharnierbolzen 29 am unteren Ende einen Kopf 34, der in einer entsprechenden Vertiefung 35 im unteren Steg 28a des zweiten Schwenkarms 28 anliegt. Am oberen Ende weist der Scharnierbolzen 29 einen Gewindezapfen 36 auf, auf den eine Einstellmutter 37 und eine als Hutmutter ausgeführte Kontermutter 38 aufgeschraubt sind. Zwischen dem oberen Steg 27a des Schwenkarms 27 und der Einstellmutter 37 ist eine Beilagscheibe 39 angeordnet.

Wie aus Figur 4 hervorgeht, ist zwischen den Stegen 27a und 28a der beiden Schwenkarme 27 und 28 ein vorgegebener Abstand vorgesehen. Durch Lösen der Kontermutter 38 und anschließendes Drehen der Einstellmutter 37 kann so die Höhe des Schwenkarms 28 eingestellt werden.

Die Erfindung ist nicht auf das vorstehend beschriebene und in der Zeichnung dargestellte Ausführungsbeispiel beschränkt. So kann die Gelenkverbindung mehr als zwei gelenkig miteinander verbundene Schwenkarme aufweisen, wenn dies im Hinblick auf die Bewegungsmöglichkeiten erforderlich ist. Die Erfindung ist überall dort einsetzbar, wo nicht ohne weiteres zugängliche Maschinenteile bewegt bzw. gehandhabt werden müssen.

## Patentansprüche

1. Verfahrenstechnische Maschine, insbesondere Mühle, Sichter oder Zellenradschleuse, mit mindestens einer Gelenkverbindung zur beweglichen Halterung mindestens eines bewegbaren Maschinenteils (7; 16; 32) an einem feststehenden Maschinenteil (1; 31), **dadurch gekennzeichnet, daß** die Gelenkverbindung einen am feststehenden Maschinenteil (1) beweglich angelenkten ersten Schwenkarm (17; 27) und mindestens einen an diesem verschwenkbar angelenkten weiteren Schwenkarm (18; 28) zur Halterung des bewegbaren Maschinenteils (7; 16; 32) enthält.

2. Verfahrenstechnische Maschine nach Anspruch 1, **dadurch gekennzeichnet, daß** an dem ersten Schwenkarm (17; 27) ein zweiter Schwenkarm (18; 28) angelenkt ist, der das bewegbare Maschinenteil (7; 16; 32 ) trägt.

3. Verfahrenstechnische Maschine nach Anspruch 1 oder 2, **dadurch gekennzeichnet, daß** der erste Schwenkarm (17; 27) und der mindestens eine weitere Schwenkarm (18; 28) durch einen Scharnierbolzen (19, 29) gelenkig miteinander verbunden sind.

4. Verfahrenstechnische Maschine nach einem der Ansprüche 1 bis 3, **dadurch gekennzeichnet, daß** der erste Schwenkarm (17; 27) und der mindestens eine weitere Schwenkarm (18; 28) über ineinandergreifende Stege (17a, 18a; 27a, 28a) miteinander verbunden sind.

5. Verfahrenstechnische Maschine nach Anspruch 4, **dadurch gekennzeichnet, daß** die ineinandergreifenden Stege (17a, 18a; 27a, 28a) voneinander beabstandet und über einen als Einstellbolzen ausgeführten Scharnierbolzen (29) miteinander verbunden sind.

6. Verfahrenstechnische Maschine nach einem der Ansprüche 1 bis 5, **dadurch gekennzeichnet, daß** der erste Schwenkarm (17; 27) um einen Scharnierbolzen (30) verschwenkbar an dem feststehenden Maschinenteil (20; 31) angeordnet ist.

7. Verfahrenstechnische Maschine nach einem der Ansprüche 1 bis 6, **dadurch gekennzeichnet, daß** der erste Schwenkarm (17; 27) an einem gesonderten Scharnierteil (20) verschwenkbar angelenkt ist.

8. Verfahrenstechnische Maschine nach einem der Ansprüche 1 bis 7, **dadurch gekennzeichnet, daß** an dem feststehenden Maschinenteil (1) eine Klemmeinrichtung (9, 10, 13) zur Fixierung des beweglichen Maschinenteils (7) am feststehenden Maschinenteil (1) angeordnet ist.

9. Verfahrenstechnische Maschine nach Anspruch 8, **dadurch gekennzeichnet, daß** die Klemmeinrichtung (9, 10, 13) zwei zur Seite verschwenkbare Klemmbügel (9, 10) enthält, die durch eine Spannschraube (13) verspannbar sind.

10. Verfahrenstechnische Maschine nach Anspruch 9, **dadurch gekennzeichnet, daß** der Verschwenkbereich der um jeweils einen Gelenksstift (11, 12 ) verschwenkbaren Klemmbügel (9, 10) durch seitliche Anschläge (14, 15) begrenzt wird.

11. Verfahrenstechnische Maschine nach einem der Ansprüche 1 bis 10, **dadurch gekennzeichnet, daß** sie eine erste Gelenkverbindung (17, 18) zur Halterung eines Gehäuseteils (7) und eine zweite Gelenkverbindung (17, 18) zur Halterung einer Montage- bzw. Demontagevorrichtung (16) enthält.

12. Verfahrenstechnische Maschine nach Anspruch 11 , **dadurch gekennzeichnet, daß** das Gehäuseteil (7) um einen Lagerzapfen (21) drehbar an dem mindestens einen weiteren Schwenkarm (18) der ersten Gelenkverbindung (17, 18) angeordnet ist.

13. Verfahrenstechnische Maschine nach Anspruch 11 oder 12, **dadurch gekennzeichnet, daß** die Montage- bzw. Demontageeinrichtung (16) eine vertikale Haltestütze (23) enthält, die um einen Lagerzapfen (24) drehbar an dem mindestens einen weiteren Schwenkarm (18) der zweiten Gelenkverbindung (17, 18) angeordnet ist.

14. Verfahrenstechnische Maschine nach Anspruch 13, **dadurch gekennzeichnet, daß** die Haltestütze (23) höhenverstellbar ist.

15. Verfahrenstechnische Maschine nach Anspruch 13 oder 14, **dadurch gekennzeichnet, daß** an der Haltestütze (23) eine Montagebuchse (26) zum Halten und zum Lösen bzw. Befestigen eines demontierbaren Maschinenteils (4) angeordnet ist.
